# EUROPÄISCHE PATENTSCHRIFT

(11) **EP 0 563 536 B1**
(45) Veröffentlichungstag und Bekanntmachung des Hinweises auf die Patenterteilung: **07.05.1997**
(21) Anmeldenummer: 93101699.2
(22) Anmeldetag: 04.02.1993
(51) Int. Cl.: E04B 1/94, C09K 21/06

(54) **Isolierkörper und Verfahren zur Herstellung desselben**
Insulating body and method for its production
Corps isolant et procédé pour sa réalisation

(30) Priorität: 02.04.1992 CH 1071/92
(43) Veröffentlichungstag der Anmeldung: 06.10.1993
(73) Patentinhaber: Miglierina, Remo, CH-8049 Zürich (CH); Meier, Roger J., CH-8004 Zürich (CH)
(72) Erfinder: Miglierina, Remo, CH-8049 Zürich (CH); Meier, Roger J., CH-8004 Zürich (CH)
(74) Vertreter: Althoff, Gerhard

(56) Entgegenhaltungen:
- DE-A- 3 206 218
- DE-A- 3 545 001
- DE-A- 3 624 164
- DATABASE WPIL Week 7841, Derwent Publications Ltd., London, GB; AN 78-735599A

## Beschreibung

Die Erfindung betrifft ein Verfahren zur Herstellung von Isolierkörpern aus Recyclingstoffen in Form eines aufgefaserten und zerkleinerten Zellulosematerials wie Papier- und/oder Holzabfälle, wobei das Zellulosematerial mit einem Bindemittel besprüht und zu einem plattenförmigen Isolierkörper zusammengepresst wird, sowie eine Einrichtung gemäß dem Oberbegriff des Anspruchs 7.

Zur Herstellung von Dämmschichten ist aus der DE-A 36 24 164 (vgl. Oberbegriff der Ansprüche 1 und 7) ein Verfahren sowie eine Einrichtung bekannt, bei welchem/welcher Materialien in Form von Stroh, Holzwolle oder Papier oder dergleichen einem Aufnahmebehälter und von diesem über eine zugeordnete Zerkleinerungsmaschine, einem Vorratsbehälter, einer Dosiervorrichtung und anschliessend in aufgewirbeltem Zustand einem Mischbehälter zugeführt und in diesem mit einem Bindemittel besprüht werden. Bei der bekannten Einrichtung wird das mit Bindemittel besprühte Material ausschliesslich zwischen zwei Förderbändern zu einer in Abhängigkeit des in vertikaler Richtung dazwischen vorgesehenen Abstandes zu einer Dämmschicht mit annähernd vorbestimmbarer Dicke geformt.

Aus der CH-A 672 806 ist weiterhin ein flammenhemmender Isolierkörper sowie ein Verfahren zu dessen Herstellung bekannt, wobei der Isolierkörper aus einem Gebilde organischer Fasern oder brennbarer Teile in den einzelnen Faserbündeln besteht und das Fasergebilde als Flammschutz wirkende Zutaten enthält, welche bei Hitze und Pyrolyse flammenhemmend wirken und bei Erhitzung dem Verbrennungsprozess die erforderliche Energie entziehen.

Der Erfindung liegt die Aufgabe zugrunde, Verbesserungen für ein Verfahren sowie für eine Einrichtung zur Durchführung des Verfahrens aufzuzeigen, mittels derer feuerfeste, plattenförmige Isolierkörper mit verhältnismässig hohen Isolations- und Festigkeitseigenschaften auf einfache und wirtschaftliche Weise hergestellt werden können.

Hinsichtlich des Verfahrens wird die Aufgabe dadurch gelöst, dass das Zellulosematerial vor dem Besprühen mit dem Bindemittel in einer Salzlösung, vorzugsweise in einer Borsalzlösung feuerhemmend imprägniert, anschliessend getrocknet und danach mit dem aus Leim oder Wasserglas hergestellten Bindemittel besprüht wird, wobei das derart vorbehandelte Zellulosematerial in Form einer breiigen Masse vor dem Zusammenpressen auf ein vorbestimmtes Mass komprimiert und anschliessend unter Druck und/oder Erwärmung auf die vorbestimmte Dicke des Isolierkörpers zusammengepresst wird.

Hierbei hat sich als besonders vorteilhaft herausgestellt, dass das feuerhemmend imprägnierte Zellulosematerial nach dem Trocknen wesentlich besser mit dem Bindemittel benetzt werden kann. Die nach dem erfindungsgemässen Verfahren hergestellten plattenförmigen Isolierkörper haben einen nahezu unbegrenzten Anwendungsbereich und können bespielsweise durch Kleben, Nageln oder Schrauben an zu isolierenden Baukörpern befestigt werden. In der Praxis hat sich zudem herausgestellt, dass die Isolierkörper problemlos gesägt, gefräst und geschliffen werden können. Zudem können zwei oder mehrere nebeneinanderliegend angeordnete plattenförmige Isolierkörper durch eine an sich bekannte Nut-/Federverbindung miteinander verbunden werden.

Die Erfindung erfasst aber auch den zusätzlichen Gedanken, dass dem Isolierkörper nach dem Zusammenpressen weitere Feuchtigkeit entzogen wird und die Feuchtigkeit in flüssiger Form und in Abhängigkeit ihrer chemischen Zusammensetzung mit einem Binde- und/oder Imprägniermittel aufbereitet, vermischt und zum Besprühen des aufgefaserten Zellulosematerials verwendet wird.

Ferner besteht die Möglichkeit, den plattenförmigen Isolierkörper mindestens einseitig, vorzugsweise aber beidseitig mit einer Folie, beispielsweise mit einer Folie aus Kunststoff zu versehen. Hierbei hat sich als besonders vorteilhaft herausgestellt, die Folie auf ihre Erweichungstemperatur zu erwärmen und unter Druck auf das Zellulosematerial aufzubringen und mit diesem zu einer Einheit zusammenzupressen.

Mit dem erfindungsgemässen Isolierkörper durchgeführte Versuche haben zudem ergeben, dass dieser sorptionsfähig, feuchtigkeitsreguliernd, elektrisch neutral und absolut frei von toxischen Ausgasungen ist.

Es ist ferner eine Einrichtung vorgesehen, mittels welcher das feuerhemmend vorbehandelte Zellulosematerial getrocknet und danach in aufgelockerter Form mit Bindemittel besprüht und anschliessend als breiige Masse auf ein vorbestimmtes Mass komprimiert und danach unter Druck und/oder Erwärmung auf die vorbestimmte Dicke des Isolierkörpers zu einer Einheit zusammenpressbar ist. Die erfindungswesentlichen Merkmale der Einrichtung ergeben sich aus dem kennzeichnenden Teil des Anspruchs 7 und den davon abhängigen Ansprüchen 8 bis 10.

Bei der bisher bekannten Einrichtung (DE-A 36 24 164) werden die Recyclingstoffe ausschliesslich mit dem Bindemittel vorbehandelt und die derart benetzte Masse nach kurzzeitigem Mischen auf das umlaufend angetriebene Förderband gegeben und während des Transports sowie in Abhängigkeit der vorbestimmten Verfestigungszeit zu einer verhältnismässig instabilen Dämmschicht geformt.

Mit der erfindungsgemässen Einrichtung besteht nunmehr die Möglichkeit, einen plattenförmigen und in sich stabilen Isolierkörper mit verhältnismässig hoher Festigkeit herzustellen, welcher wie bereits vorstehend erwähnt einen nahezu unbegrenzten Verwendungsbereich hat.

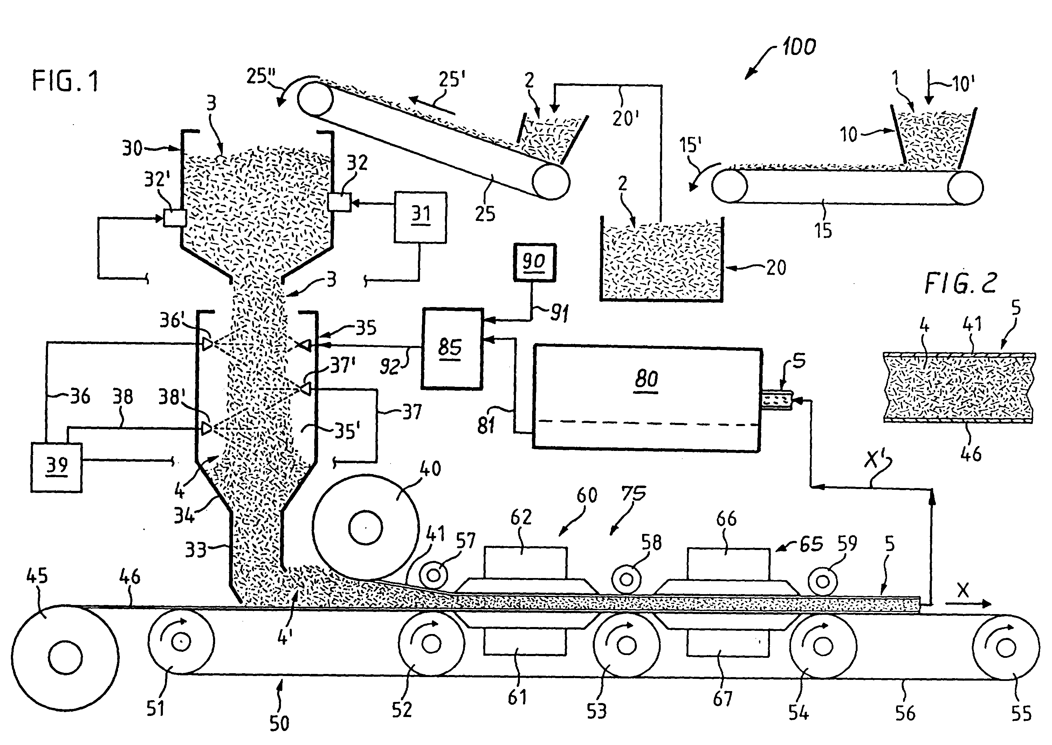

Weitere Vorteile, Merkmale und Einzelheiten der Erfindung ergeben sich aus der nachfolgenden Beschreibung sowie anhand der Zeichnung, bei welcher in Fig.1 schematisch eine erfindungsgemässe Einrichtung und in Fig.2 ein damit hergestellter Isolierkörper dargestellt ist.

Die Erfindung wird nachstehend unter Bezugnahme auf die Zeichnung näher beschrieben. Es zeigt:
- Fig. 1: eine schematisch dargestellte Einrichtung zur Herstellung von plattenförmigen Isolierkörpern,
- Fig. 2: ein in grösserem Massstab und im Schnitt dargestelltes Teilstück des Isolierkörpers.

Fig.1 zeigt eine schematisch dargestellte und in der Gesamtheit mit 100 bezeichnete Einrichtung zur Herstellung von Isolierkörpern, insbesondere von plattenförmigen Isolierkörpern. Die Einrichtung 100 besteht im wesentlichen aus einem Sammelbehälter 10, einem Waschbehälter 20, einem Aufbereitungsbehälter 30 sowie einem Mischbehälter 35 und einer zugeordneten Bearbeitungsstation 75. Die Bearbeitungsstation 75 umfasst im wesentlichen eine Fördervorrichtung 50 und zwei im Abstand zueinander angeordnete Heiz- und Pressvorrichtungen 60 und 65.

Die Fördervorrichtung 50 hat ein mit nicht dargestellten Mitteln in Transportrichtung X angetriebenes Förderband 56, welches am vorderen und hinteren Ende der Fördervorrichtung 50 jeweils um eine Rolle 51 und 55 umgelenkt ist. In Transportrichtung X gesehen, sind zwischen den beiden Rollen 51 und 55 im Abstand zueinander angeordnete Gegendruckwalzen 52,53 und 54 in nicht näher dargestellter Weise gelagert. Korrespondierend zu den Gegendruckwalzen 52,53 und 54 sind entsprechende Druckwalzen 57,58 und 59 vorgesehen, welche in nicht näher dargestellter Weise relativ zu den Gegendruckwalzen 52,53 und 54 einstellbar sind. Mittels dem der ersten Heiz- und Pressvorrichtung 60 vorgeschalteten Walzen paar 52,57 kann eine Voreinstellung der Dicke des herzustellenden Isolierkörpers 5 vorgenommen werden.

Der Fördervorrichtung 50 sind, wie in Fig.1 schematisch dargestellt, die beiden in Transportrichtung X im Abstand zueinander angeordneten Heiz- und Pressvorrichtungen 60 und 65 zugeordnet. Weiterhin sind, in Transportrichtung X gesehen, vor der ersten Heiz- und Pressvorrichtung 60 ein oder zwei entsprechend gelagerte Vorratsrollen 40 und 45 angeordnet, von welchen jeweils eine Beschichtungsfolie 41 und 46 abgezogen und auf den herzustellenden Isolierkörper aufgebracht werden kann.

Bei einem bevorzugten Ausführungsbeispiel der Einrichtung 100 kann der aus der Heiz- und Pressvorrichtung 60 und 65 austretende Isolierkörper 5, wie schematisch mit Pfeilrichtung X' dargestellt, zusätzlich einem schematisch dargestellten Ofen 80 zugeführt werden. In dem beispielsweise als Vakuum-Ofen ausgebildeten Ofen 80 wird dem Isolierkörper 5 weitere Feuchtigkeit entzogen, welche in flüssiger Form über eine Leitung in einen Sammelbehälter 85 rückgeführt wird. Von einem weiteren Vorratsbehälter 90 kann zur Aufbereitung der im Ofen 80 dem Isolierkörper 5 entzogenen Flüssigkeit über eine Leitung 91 dem Sammelbehälter 85 weiteres Binde- und/oder Imprägniermittel oder Wasser zugeführt werden. Das Binde- und/oder Imprägniermittel oder Wasser wird beispielsweise in Abhängigkeit von der chemischen Zusammensetzung der vom Vakuum-Ofen 80 rückgeführten Flüssigkeit dosiert und in dem Sammelbehälter 85 gemischt.

Das in dem Sammelbehälter 85 vermischte und aufbereitete flüssige Medium kann über eine Leitung 92 dem Mischbehälter 35 zum Besprühen des flocken- und/oder streifenförmigen Zellulosematerials 3 zugeführt werden. Durch den in sich geschlossenen Kreislauf wird eine optimale Ausnutzung des Binde- und/oder Imprägniermittels sowie der dem Isolierkörper entzogenen flüssigkeit erreicht.

Die zu verarbeitenden Stoffe in Form von Altpapier (Zeitungen, Karton) und/oder Holzabfällen werden in einer nicht dargestellten Einrichtung im RECYCLING-Verfahren vorbereitet und gemäss Pfeilrichtung 10' als aufgefasertes und zerkleinertes Zellulosematerial 1 dem Sammelbehälter 10 zugeführt. Von dem Sammelbehälter 10 wird das Zellulosematerial 1 über ein zugeordnetes erstes Förderband 15 gemäss Pfeilrichtung 15' in den Waschbehälter 20 transportiert.

In dem Waschbehälter 20 wird das Zellulosematerial 1 in einem entsprechenden Medium (feuerhemmend) beispielsweise in einer Salzlösung, vorzugsweise jedoch in einer Borsalz-Lösung, behandelt und anschliessend als imprägniertes und nicht entflammbares Zellulosematerial 2 mit nicht dargestellten Mitteln gemäss Pfeilrichtung 20' einem zweiten Förderband 25 und von diesem gemäss Pfeilrichtung 25' und 25" dem Aufbereitungsbehälter 30 zugeführt. Das mit der Borsalz-Lösung behandelte Zellulosematerial 2 ist in dieser Behandlungsphase feuerhemmend und gegen Ungeziefer sowie Pilzbefall imprägniert.

In dem Aufbereitungsbehälter 30 wird das feuerhemmend imprägnierte Zellulosematerial 2 durch mindestens ein, vorzugsweise jedoch durch mehrere verteilt zueinander angeordnete, schematisch dargestellte Gebläse 32,32' oder dergleichen getrocknet und aufgelockert. Die beiden Gebläse 32,32' stehen mit einem zugeordneten Gebläse-Aggregat 31 in nicht näher dargestellter Weise in Verbindung. Das im Aufbereitungsbehälter 30 getrocknete und in dieser Behandlungsphase mit 3 bezeichnete Zellulosematerial wird anschliessend mit nicht dargestellten Mitteln dem Mischbehälter 35 zugeführt.

Im Innenraum 35' des Mischbehälters 35 sind mehrere, versetzt zueinander angeordnete Düsen 36',37' und 38' angeordnet, welche über Leitungen 36,37 und 38 mit einem zugeordneten Sprühaggregat 39 verbunden sind. Das dem Innenraum 35' des Mischbehälters 35 etwa rieselnd zugeführte, flocken- und/oder streifenförmige Zellulosematerial 3 wird von den einzelnen Düsen 36',37' und 38' mit einem geeigneten Bindemittel besprüht und anschliessend über vorzugsweise trichterförmig ausgebildete Teilstücke 34,33 des Mischbehälters 35 dem Förderband 56 der Fördervorrichtung 50 zugeführt.

Zum Beaufschlagen des Zellulosematerials 3 können unterschiedliche, leicht sprühbare und das im wesentlichen flockenförmige und/oder streifenförmige Zellulosematerial miteinander verbindende Medien verwendet werden. Vorzugsweise wird ein geeigneter, anorganischer oder organischer Leim oder aber Wasserglas oder dergleichen verwendet. Wesentlich hierbei ist es, dass das mit dem Leim oder Wasserglas besprühte und in dieser Behandlungsphase mit 4 bezeichnete Zellulosematerial nach dem Zusammenpressen beziehungsweise nach dem Zusammenpressen und gleichzeitiger Wärmebehandlung eine kompakte, ausgehärtete Einheit bildet.

Das besprühte Zellulosematerial 4 gelangt anschliessend auf die Fördervorrichtung 50 und wird von dem mit nicht dargestellten Mitteln angetriebenen Förderband 56 in Pfeilrichtung X der ersten Heiz- und Pressvorrichtung 60 und anschliessend der zweiten Heiz- und Pressvorrichtung 65 zugeführt. Die beiden Heiz- und Pressvorrichtungen 60 und 65 sind jeweils mit entsprechend ausgebildeten Druck- und Gegendruckelementen 61,62 sowie 66,67 versehen, in welchen jeweils ein nicht dargestelltes Heizelement angeordnet werden kann.

Das aus dem trichterförmigen Teilstück 34, 33 des Mischbehälters 35 im wesentlichen als wulstförmige Masse 4' austretende Zellulosematerial 4 wird in einer ersten Phase von der ersten Druckwalze 57 und der zugeordneten Gegendruckwalze 52 auf ein vorbestimmtes Mass komprimiert und zusammengedrückt und danach nacheinander in der ersten und zweiten Heiz- und Pressvorrichtung 60 und 65 durch Erwärmung oder Erhitzung sowie durch erhöhten Druck auf das vorbestimmte Dickenmass des herzustellenden, plattenförmigen Isolierkörpers 5 zusammengepresst.

Bei einer weiteren Ausführungsform der Einrichtung 100 wird dem aus dem trichterförmigen Teilstück 34, 33 als wulstförmige Masse 4' austretenden Zellulosematerial 4 mindestens einseitig, vorzugsweise jedoch beidseitig von der ersten und der zweiten Vorratsrolle 40 und 45 die Beschichtungsfolie 41 und 46 zugeführt, Anschliessend wird die Masse 4' zusammen mit der Beschichtungsfolie 41,46 von der ersten Druckwalze 57 und der zugeordneten Gegendruckwalze 52 auf ein vorbestimmtes Mass komprimiert (zusammengedrückt) und danach in der ersten und zweiten Heiz- und Pressvorrichtung 60 und 65 durch Erwärmung und durch Druck auf die vorbestimmte Dicke des herzustellenden, plattenförmigen Isolierkörpers 5 zusammengepresst.

Mittels der nicht dargestellten und in den beiden Vorrichtungen 60 und 65 angeordneten Heizelemente werden die beispielsweise aus Kunststoff hergestellten Beschichtungsfolien 41 und 46 auf ihre Erweichungstemperatur erwärmt und mit dem besprühten Material 4 unter Druck zu einer Einheit miteinander verbunden.

Als Beschichtungsfolie 41 und 46 kann auch ein bahnenförmiges Recycling-Papier, eine als Dampfsperre dienende Folie aus Aluminium oder aber die erwähnte Folie aus Kunststoff verwendet werden. Jeweils den Anforderungen entsprechend, können auch gelochte oder profilierte Folien verwendet und aufgetragen werden. Der Isolierkörper 5 kann jedoch auch ohne eine entsprechende Beschichtungsfolie hergestellt werden.

Bei einer nicht dargestellten Variante besteht auch die Möglichkeit, dass (in Transportrichtung X gesehen) hinter der letzten Heiz- und Pressvorrichtung 65 eine nicht dargestellte Kühleinrichtung sowie eine Schneideinrichtung angeordnet sind. Mittels der Schneideinrichtung kann der in der Einrichtung 100 im wesentlichen als endloser, plattenförmiger Isolierkörper 5 hergestellte Körper in einzelne, mit vorbestimmten Abmessungen versehene Platten-Elemente (nicht dargestellt) geschnitten werden.

Der aus dem Zellulosematerial hergestellte, nicht entflammbare Isolierkörper 5 ist elektrisch neutral, geruchsfrei und grundlegend ungiftig und eignet sich insbesondere aufgrund der Wärme-, Kälte- und Schallschutz-Eigenschaften sowie der hohen Festigkeit zu Oberflächenbelägen von Bauteilen oder dergleichen.

Fig.2 zeigt ein in grösserem Massstab und im Schnitt dargestelltes Teilstück des in der Einrichtung 100 hergestellten Isolierkorpers 5, und man erkennt das auf die vorbestimmte Dicke zusammengepresste Zellulosematerial 4, welches beidseitig mit der entsprechend aufgebrachten Folie 41 und 46 versehen ist.

Der erfindungsgemässe Isolierkörper 5 kann in beliebiger Weise an den zu isolierenden Baukörperteilen angebracht und z.B. durch Kleben, Nageln oder Schrauben befestigt werden. Der Isolierkörper 5 kann zudem aufgrund seiner hohen Festigkeit auch als tragendes Bauelement in der Bauindustrie und kann weiterhin aufgrund der optimalen Isoliereigenschaften auch bei Kühlschränken oder dergleichen verwendet werden.

Zusammenfassend kann festgestellt werden, dass der aus dem imprägnierten Zellulosematerial 1 bis 4,4' hergestellte Isolierkörper 5 sorptionsfähig, feuchtigkeitsregulierend und elektrisch neutral ist. Der Isolierkörper 5 hat ferner keine toxische Ausgasung, keine Emissionen und kann einer vollständigen Reststoffverwertung zugeführt werden.

Weitere Vorteile werden darin gesehen, dass der Isolierkörper 5 gesägt, gefräst und geschliffen werden kann. Eine sogenannte Nut-/Federverbindung einzelner Isolierkörper 5 untereinander ist ebenfalls möglich.

## Patentansprüche

1. Verfahren zur Herstellung von Isolierkörpern aus Recyclingstoffen in Form eines aufgefaserten und zerkleinerten Zellulosematerials wie Papier- und/oder Holzabfälle, wobei das Zellulosematerial mit einem Bindemittel besprüht und zu einem plattenförmigen Isolierkörper zusammengepresst wird, **dadurch gekennzeichnet,** dass das Zellulosematerial (3) vor dem Besprühen mit dem Bindemittel in einer Salzlösung, vorzugsweise in einer Borsalzlösung feuerhemmend imprägniert, anschliessend getrocknet und danach mit dem aus Leim oder Wasserglas hergestellten Bindemittel besprüht wird, wobei das derart vorbehandelte Zellulosematerial (4;4') in Form einer breiigen Masse vor dem Zusammenpressen auf ein vorbestimmtes Mass komprimiert und anschliessend unter Druck und/oder Erwärmung auf die vorbestimmte Dicke des Isolierkörpers (5) zusammengepresst wird.

2. Verfahren nach Anspruch 1, **dadurch gekennzeichnet,** dass zum Besprühen des imprägnierten und getrockneten Zellulosematerials (3) ein organischer oder anorganischer Leim oder Wasserglas verwendet wird.

3. Verfahren nach Anspruch 1, **dadurch gekennzeichnet**, dass dem Isolierkörper (5) nach dem Zusammenpressen weitere Feuchtigkeit entzogen wird, welche in Abhängigkeit ihrer chemischen Zusammensetzung mit einem Binde- und/oder Imprägniermittel aufbereitet, vermischt und zum Besprühen des Zellulosematerials (3) verwendet wird.

4. Verfahren nach Anspruch 1, **dadurch gekennzeichnet,** dass dem vorbehandelten Zellulosematerial (4,4') vor dem Komprimieren und Zusammenpressen mindestens einseitig eine auf ihre Erweichungstemperatur erwärmte Beschichtungsfolie (41,46) zugeführt wird, welche zusammen mit dem Zellulosematerial (4, 4') unter Druck und Erwärmung zu einer die vorbestimmte Dicke des Isolierkörpers (5) aufweisenden Einheit zusammengepresst wird.

5. Verfahren nach Anspruch 4, **dadurch gekennzeichnet**, dass als Beschichtungsfolie (41,46) eine gelochte oder profilierte sowie auf ihre Erweichungstemperatur erwärmbare Folie aus Kunststoff verwendet und mit dem Zellulosematerial (4,4') zu einer Einheit zusammengepresst wird.

6. Verfahren nach den Ansprüchen 1 bis 5, **dadurch gekennzeichnet,** dass als Zellulosematerial feuerhemmend imprägnierbare und mit dem Bindemittel besprühbare Papierstreifen verwendet werden.

7. Einrichtung zum Behandeln von Recyclingstoffen in Form von aufgefaserten und zerkleinerten Zellulosematerialien wie Papier- und/oder Holzabfälle, mit einem Vorratsbehälter (10), einem Waschbehälter (20) und einem mit Düsen versehenen Mischbehälter (35), von welchem das mit Bindemittel besprühte Zellulosematerial (4,4') zum Zusammenpressen einer mit einem Förderband (56) versehenen Bearbeitungsstation (75) zuführbar ist, **dadurch gekennzeichnet,** dass dem Mischbehälter (35) ein zum Trocknen und Auflockern des vom Waschbehälter (20) zugeführten Zellulosematerials mit mindestens einem Gebläse (32, 32') versehener Aufbereitungsbehälter (30) vorgeschaltet ist, und dass die dem Mischbehälter (35) nachgeschaltete Bearbeitungsstation (75) mindestens ein mit dem Förderband (56) in Verbindung stehendes und als Druck- und Gegendruckwalze wirkendes erstes Walzenpaar (52,57) sowie mindestens eine in Transportrichtung dem ersten Walzenpaar (52,57) nachgeschaltete Heiz- und Pressvorrichtung (60) aufweist, welche mit einem Heizelement sowie mit einem Druck- und Gegendruckelement (61,62) versehenen ist.

8. Einrichtung nach Anspruch 7, **dadurch gekennzeichnet,** dass der ersten Heiz- und Pressvorrichtung (60) eine zweite Heiz- und Pressvorrichtung (65) zugeordnet und zwischen den beiden Heiz- und Pressvorrichtungen (60;65) sowie im Anschluss an die zweite Heiz- und Pressvorrichtung (65) jeweils ein als Druck- und Gegendruckwalze wirkendes Walzenpaar (53,58;54,59) angeordnet ist.

9. Einrichtung nach Anspruch 7, **dadurch gekennzeichnet,** dass die beiden Heiz- und Pressvorrichtungen (60;65) je ein mit einem Heizelement versehenes Druck- und Gegendruckelement (61,62;66,67) aufweisen, wobei die Druckelemente (62;66) oberhalb und die Gegendruckelemente (61;67) korrespondierend dazu unterhalb des Förderbandes (56) angeordnet sind.

10. Einrichtung nach Anspruch 7, **dadurch gekennzeichnet,** dass der Bearbeitungsstation (75) für den Entzug der in dem Isolierkörper (5) noch vorhandenen Feuchtigkeit ein Ofen, vorzugsweise ein Vakuum-Ofen (80) zugeordnet ist, von welchem die entzogene Feuchtigkeit in flüssiger Form über einen damit in Verbindung stehenden Sammelbehälter (85) dem Mischbehälter (35) zuführbar ist.

## Claims

1. Method of producing insulating bodies from recycled substances in the form of a fiberised and size-reduced cellulose material such as paper and/or wood waste, the cellulose material being sprayed with a binder and squeezed to form a board-shaped insulating body, characterised in that the cellulose material (3) is impregnated in a salt solution, preferably in a boric salt solution to make it fire-retardant, prior to spraying with the binder, is then dried and subsequently sprayed with the binder produced from glue or water glass, the thus pretreated cellulose material (4; 4') in the form of a pulpy mass being compressed prior to squeezing to a predetermined size and then being squeezed to the predetermined thickness of the insulating body (5) under pressure and/or heat.

2. Method according to claim 1, characterised in that an organic or inorganic glue or water glass is used for spraying the impregnated and dried cellulose material (3).

3. Method according to claim 1, characterised in that further moisture is extracted from the insulating body (5) after squeezing and is worked up and blended with a binder and/or impregnating agent depending on its chemical composition and is used for spraying the cellulose material (3).

4. Method according to claim 1, characterised in that a coating film (41, 46) which is heated to its softening temperature is supplied to the pretreated cellulose material (4, 4') prior to compression and squeezing, at least on one side, and is squeezed together with the cellulose material (4, 4') under pressure and heat to form a unit having the predetermined thickness of the insulating body (5).

5. Method according to claim 4, characterised in that a perforated or profiled film of plastics material which can be heated to its softening temperature is used as coating film (41, 46) and is squeezed to a unit with the cellulose material (4, 4').

6. Method according to claims 1 to 5, characterised in that strips of paper which can be impregnated to make them fire-retardant and can be sprayed with the binder are used as cellulose material.

7. Apparatus for treating recycled materials in the form of fiberised and size-reduced cellulose materials such as paper and/or wood waste with a storage container (10), a washing container (20) and a mixing container (35) which is provided with nozzles and from which the cellulose material (4, 4') sprayed with binder can be supplied to a processing station (75) provided with a conveyor belt (56) for squeezing, characterised in that the mixing container (35) is preceded by a processing container (30) provided with at least one blower (32, 32') for drying and loosening the cellulose material supplied from the washing container (20) and in that the processing station (75) following the mixing container (35) has at least one first roller pair (52, 57) connected to the conveyor belt (56) and acting as a pressure and counter-pressure roller and at least one heating and pressing device (60) which follows the first roller pair (52, 57) in the conveying direction and is provided with a heating element and with a pressure and counter-pressure element (61, 62).

8. Apparatus according to claim 7, characterised in that the first heating and pressing device (60) is allocated a second heating and pressing device (65) and a respective roller pair (53, 58; 54, 59) acting as pressure and counter-pressure roller is arranged between the two heating and pressing devices (60; 65) and after the second heating and pressing device (65).

9. Apparatus according to claim 7, characterised in that the two heating and pressing devices (60; 65) each have a pressure and counter-pressure element (61, 62; 66, 67) provided with a heating element, the pressure elements (62; 66) being arranged above the conveyor belt (56) and the counter-pressure elements (61; 67) being correspondingly arranged beneath the conveyor belt (56).

10. Apparatus according to claim 7, characterised in that the processing station (75) for extraction of the moisture still present in the insulating body (5) is allocated an oven, preferably a vacuum oven (80) from which the extracted moisture can be supplied in liquid form via a receiver (85) connected thereto to the mixing container (35).

## Revendications

1. Procédé de fabrication de corps isolants en substance recyclé sous forme de matière cellulosique défibrée et broyée telle que du papier et/ou déchets de bois selon lequel la matière cellulosique est aspergée avec un liant et comprimée en un corps isolant en forme de plaque, caractérisé en ce que la matière cellulosique (3) avant d'être aspergée avec le liant, est imprégnée dans une saumure, de préférence dans une solution de sel borique pour devenir ignifuge, qu'elle est ensuite séchée et aspergée avec le liant réalisé à partir de colle ou de verre soluble et que la matière cellulosique (4, 4') ainsi préparée en forme de masse pâteuse est, avant sa compression, précomprimée à un degré déterminé et ensuite comprimée sous pression et/ou chaleur jusqu'à l'épaisseur prédéterminée du corps isolant (5).

2. Procédé selon la revendication 1, caractérisé en ce que de la colle organique ou inorganique ou du verre soluble est utilisé(e) pour asperger la matière cellulosique imprégnée et séchée (3)

3. Procédé selon la revendication 1, caractérisé en ce que l'on enlève au corps isolant (5), après la compression, de l'humidité supplémentaire, qui, en fonction de sa composition chimique, est traitée et mélangée avec un liant et/ou produit d'imprégnation et utilisée pour asperger la matière cellulosique (3).

4. Procédé selon la revendication 1, caractérisé en ce que la matière cellulosique (4, 4') reçoit, avant sa précompression et compression, au moins d'un côté une pellicule de revêtement (41, 46) réchauffée à sa température de ramollissement qui, ensemble avec la matière cellulosique (4, 4'), est comprimée sous pression et chaleur en une unité ayant l'épaisseur prédéterminée du corps isolant

5. Procédé selon la revendication 4, caractérisé en ce que l'on utilise comme pellicule de revêtement (41, 46) une pellicule perforée et profilée en matière synthétique pouvant être réchauffée à sa température de ramollissement et comprimée avec la matière cellulosique (4, 4') en une unité.

6. Procédé selon les revendications 1 à 5, caractérisé en ce que l'on utilise comme matière cellulosique des bandelettes de papier pouvant être imprégnées de manière ignifuge et aspergées avec le liant.

7. Installation de traitement de substances de recyclage sous forme de matière cellulosique défibrée et broyée telle que des déchets en papier et/ou en bois, avec une trémie de stockage (10), un réservoir de lavage (20) et une trémie de mélange (35) équipée de gicleurs à partir de laquelle la matière cellulosique (4, 4') aspergée de liant peut être amenée, en vue de la compression, dans une station de travail (75) équipée d'une bande transporteuse (56), caractérisée en ce que la trémie de mélange (35) est précédée d'un réservoir de traitement (30) avec au moins une soufflerie (32, 32') pour sécher et ameublir la matière cellulosique en provenance du réservoir de lavage (20) et en ce que la station de travail (75) faisant suite à la trémie de mélange (35) comporte au moins un premier couple de tambours (52, 57) associés à la bande transporteuse (56) et faisant office de tambours de pression et contre-pression et au moins une presse chauffante (60), disposée dans la direction de transport derrière la première paire de tambours (52, 57) et qui est équipée d'un élément de chauffage ainsi que d'éléments de pression et de contre-pression (61, 62).

8. Installation selon la revendication 7, caractérisée en ce qu'une seconde presse chauffante (65) est associée à la première presse chauffante (60) et que, entre les deux presses chauffantes (60 ; 65) ainsi qu'à la suite de la seconde presse chauffante (65), se trouvent respectivement deux couples de tambours (53, 58 ; 54, 59) faisant office de tambours de pression et de contre-pression.

9. Installation selon la revendication 7, caractérisée en ce que les deux presses chauffantes (60 ; 65) comportent chacune un élément de pression et de contre-pression (61, 62 ; 66, 67) équipé d'un élément de chauffage et en ce que les éléments de pression (62 ; 66) se trouvent au-dessus de la bande transporteuse (56) et les éléments de contre-pression (61, 67) en dessous.

10. Installation selon la revendication 7, caractérisée en ce qu'un four, de préférence un four à vide (80) est associé à la station de travail (75) pour l'extraction de l'humidité résiduelle du corps isolant (5) et à partir duquel l'humidité extraite est dirigée, sous forme liquide, dans la trémie de mélange à travers un collecteur (85) relié à celle-ci.
